# FASCICULE DE BREVET EUROPEEN

(11) **EP 2 531 342 B1**
(45) Date de publication et mention de la délivrance du brevet: **20.05.2015**
(21) Numéro de dépôt: 11705924.6
(22) Date de dépôt: 25.01.2011
(51) Int. Cl.: B29C 65/08, B29C 65/50, B29C 65/72, B29C 65/74, A41B 11/12, A41D 27/24, A41F 11/16, A41F 13/00, D06H 5/00, B29L 31/48, B29L 9/00

(54) **PROCEDE DE REALISATION PAR SOUDURE D'UN ARTICLE TEXTILE ENDUIT**
HERSTELLUNGSVERFAHREN EINES BESCHICHTETEN TEXTILARTIKELS DURCH SCHWEISSEN
PROCESS OF MANUFACTURE OF A COATED TEXTILE ARTICLE BY WELDING

(30) Priorité: 02.02.2010 FR 1050728
(43) Date de publication de la demande: 12.12.2012
(73) Titulaire: Dbapparel Operations, 92500 Rueil Malmaison (FR)
(72) Inventeur: MARTIN, Céline, F-71400 Autun (FR); MASSOTTE, Laurent, F-71400 Tavernay (FR)
(74) Mandataire: Gaillarde, Frédéric F. Ch.
(86) Numéro de dépôt international: PCT/FR2011/050137
(87) Numéro de publication internationale: WO 2011/095724

(56) Documents cités:
- EP-A1- 1 491 105
- WO-A1-2009/027701
- FR-A1- 2 898 016

## Description

L'invention concerne un article textile de lingerie enduit d'une matière élastomère non soudable, par exemple d'une couche de silicone, et notamment un article sous forme de bande textile élastique siliconée destinée à servir de jarretière à un bas.

On connaît par les documents EP 1 491 105, FR 2 898 016 et WO 2009/027701 des techniques de renforcement de couture ou de soudure aux ultrasons par des bandes collées.

Il est connu de prévoir sur un haut de bas, ou jarretière, une enduction de silicone assez taquante, c'est-à-dire d'une consistance entre collante et poisseuse (« tacky »), destinée à maintenir le bas en place sur la jambe sans glisser. Cette enduction se fait de préférence sur toute la périphérie intérieure de la jarretière, sous forme d'un dépôt surfacique continu, qui peut avoir quelques centimètres de largeur, et qui est assez épais pour avoir son plein effet. Grâce à la grande surface concernée, la pression sur la peau est mieux répartie et l'effet anti-glissement plus assuré.

Il existe des procédés permettant d'enduire de silicone le haut d'un bas déjà constitué. Ces procédés sont assez difficiles à mettre en oeuvre du fait qu'il convient de traiter de manière plus ou moins automatique le bas entier dans une installation d'enduction, même si seul le bord est enduit.

Il est aussi connu d'enduire sur leur périphérie intérieure des anneaux textiles destinés à former la jarretière, et de les assembler ensuite par confection ou autre méthode au reste du bas. Il n'en demeure pas moins que l'enduction d'une surface interne cylindrique n'est pas facile à réaliser.

On a déjà pensé à produire la jarretière à partir de bande textile siliconée au kilomètre, à couper un tronçon de cette bande, à en réunir les deux extrémités pour former un anneau fermé, et à assembler cet anneau par confection ou autrement sur le reste du bas.

Il convient de joindre solidement les deux extrémités du tronçon, car l'anneau est soumis à des forces d'extension très importantes une fois qu'il est porté. On ne connaît que deux procédés de jonction qui offrent ces garanties, la couture et la soudure. La couture n'est pas appréciée du fait de l'inconfort ressenti par les utilisatrices. La soudure, pratiquée généralement sur un chevauchement des deux extrémités de tronçons, est impossible ici du fait de la présence du silicone non soudable lui-même qui recouvre les deux extrémités de bande en chevauchement et qui n'est pas soudable.

Le but de l'invention est de résoudre ce problème et de proposer un procédé de jonction de pièces textiles enduites d'une matière non soudable à chaud qui permette néanmoins d'assembler solidement les deux pièces textiles, et donc de faire, par exemple un article textile enduit soudé solide.

L'invention atteint son but grâce à un procédé de réalisation d'articles textiles conforme à la revendication 1 annexée.

De manière avantageuse, la matière élastomérique est du silicone, notamment du type taquant employé usuellement pour empêcher le glissement des bas.

De manière avantageuse, la pièce textile est réalisée en un tricot élastique, de préférence une charmeuse, réalisée en grande partie à base de fibres thermoplastiques telles que du polyamide, et comprenant des fibres élastiques telles que du polyélasthanne.

La pièce textile est avantageusement sous forme de bande, de préférence de quelques centimètres de largeur, par exemple entre 3 et 5 cm.

Les bords de la bande peuvent être droits ou festonnés, notamment en écaille de poisson. Dans ce cas, il est avantageux de tenir compte du motif festonné lors de la superposition initiale de l'étape a.

L'opération b de découpe et de thermosoudure est réalisée simultanément dans une installation de découpe ultrasonique comportant une molette coopérant avec une sonotrode fixe ou rotative, et permettant d'obtenir une soudure provisoire fine. De telles installations sont connues en soi, par exemple par le document US 5 562 790, et sont commercialisées sous différentes marques, par exemple par la société SONOBOND. Pour permettre la soudure, la matière constituant les pièces contient au moins 20%, mais avantageusement au moins 50% (cf. EP 0 015 871) et de préférence au moins 70% de fibres thermoplastiques. La solidité de la soudure ultrasonore réalisée dépend du pourcentage mais n'est pas fondamentale dans la mesure où il s'agit ici d'une soudure provisoire, la véritable liaison définitive étant celle qui sera ensuite obtenue avec la pièce de renforcement thermocollée puis soudée. La proportion de fibres thermofusibles peut donc s'établir dans une gamme assez large et cela permet d'utiliser comme matière principale de nombreux mélanges de fibres comprenant des fibres thermofusibles telles que des fibres polyamide, polyester, acryliques et plus généralement thermoplastiques, au sein d'autres fibres naturelles comme le coton ou synthétique.

La pièce de raccordement de l'étape c destinée à être thermocollée est avantageusement sous forme d'un complexe comprenant un film ou une grille de colle thermoadhésive, par exemple de type copolyamide, choisie de manière à éviter les interactions avec la matière élastomérique enduisant l'article textile. La pièce de raccordement est avantageusement sous forme de ruban complexé relativement étroit (par exemple environ un centimètre) qu'il suffit de couper à longueur pour couvrir la soudure provisoire de l'article. Une fixation de thermocollage par points est particulièrement avantageuse pour conserver une certaine élasticité à l'assemblage dans le sens longitudinal de la soudure provisoire.

La pièce de raccordement peut être réalisée dans le même textile que l'article ou dans une autre matière. Elle est choisie de manière à permettre d'assurer avec l'article une bonne liaison par soudure aux ultrasons.

De préférence, compte tenu notamment de l'utilisation en lingerie, les matières sont choisies pour être stables au lavage et à la chaleur, avec un retrait limité (inférieur à quelques pourcents).

Avantageusement, le poids au mètre carré des matières utilisées tant pour les pièces ainsi que pour la bande de raccordement est de préférence compris entre 150 et 250 g/m², et plus avantageusement entre 185 et 205 g/m².

La matière constituant l'article textile, en particulier dans le cas d'une jarretière, a de préférence une élasticité comprise entre 90% et 120% sous 15 N. L'écart d'élasticité entre les deux matières est avantageusement inférieur à 30% sous 15N et de préférence à 15% sous 15N.

L'invention concerne également l'article textile obtenu par le procédé de l'invention, à savoir un article textile conforme à la revendication 5 annexée. L'article textile est avantageusement un anneau de jarretière.

D'autres caractéristiques et avantages de l'invention apparaîtront à la lecture de la description suivante d'un mode particulier de réalisation (jarretière de bas), en référence aux dessins annexés sur lesquels :
- la figure 1 est une vue schématique d'un bas auquel est destinée la jarretière obtenue conformément à l'invention,
- les figures 2 et 3 sont des vues schématiques de face et en coupe II-II d'un ruban siliconé destiné à former la jarretière de l'invention,
- la figure 4 est une vue schématique d'une installation de découpe et soudure du ruban siliconé pour former un anneau fermé,
- la figure 5 est une vue schématique de détail en coupe montrant la mise en place de la pièce de renfort sur l'anneau fermé,
- la figure 6 est une vue schématique analogue à la figure 5 du même détail, après thermocollage de la pièce de renfort sur l'anneau fermé,
- la figure 7 est une vue en plan du même détail que les figures 5 et 6, après soudure de la pièce de renfort.

Dans l'exemple préféré de réalisation de l'invention, il s'agit de réaliser une jarretière 10 destinée à être assemblée au haut d'un bas 1, par exemple par confection ou tout autre moyen approprié. Cette jarretière 10 est formée à partir d'une bande siliconée 11 fabriquée au kilomètre, composée d'une épaisseur de textile tricoté élastique 12, de préférence une charmeuse, sur laquelle a été enduite une épaisseur de silicone taquant 13 qui laisse une ou plusieurs zones non recouvertes 14, par exemple près du bord inférieur 15 pour servir à l'assemblage ultérieur de la jarretière 10 sur le bas 1. Le bord supérieur 16 peut être festonné en écailles de poisson, comme représenté, ce bord 16 étant obtenu de préférence par une découpe aux ultrasons dans la partie déjà siliconée.

Dans cette bande 11, on découpe aux ultrasons le long d'une ligne 17 transversale à la direction générale de la bande, et passant par exemple au milieu de la crête d'un feston, un tronçon 20 de bande siliconée, qui comporte deux extrémités 21a et 21b qu'on vient disposer l'une sur l'autre, en respectant les motifs des festons, de telle sorte que les épaisseurs textiles 12a et 12b soient l'une contre l'autre, et donc le silicone 13a, 13b soit placé à l'extérieur (mais on peut adopter la disposition inverse, le choix d'un sens ou l'autre étant plutôt guidé par l'entraînement des surfaces placées à l'extérieur dans l'outil de découpe aux ultrasons s'il ne s'agit pas d'un poste fixe). On place cet ensemble dans une machine de découpe aux ultrasons, entre la roulette de découpe 30 et la table inférieure 31, de manière à couper proprement les deux extrémités 21a, 21b au niveau d'une ligne 32 le long de laquelle va se former une soudure fine provisoire 22 dans la matière textile des épaisseurs 12a, 12b, compte tenu de la fusion instantanée des fibres thermoplastiques. On obtient donc à ce stade un anneau 20 fermé de manière provisoire par cette soudure 22. Cette mince ligne de soudure 22 (sa largeur peut aller de 0,05 mm à 0,3 mm mais elle est avantageusement de l'ordre de 0,15 mm) est suffisante pour retenir provisoirement l'une à l'autre les deux épaisseurs 12a, 12b et permettre leur mise à plat localisée. Au lieu d'un poste de découpe à roulette, on peut avoir une machine à ultrason à poste fixe de type Branson 2000EAD.

On déploie l'anneau au niveau de la soudure 22 sur une surface de travail d'une presse chauffante non représentée de manière à avoir bout à bout les épaisseurs de textiles 12a, 12b, soudées par la soudure provisoire 22, et les épaisseurs de silicone 13a, 13b non soudées mais contiguës. Sur cet ensemble on vient disposer à cheval sur la soudure provisoire 22, une pièce de raccordement 25, par exemple sous forme de tronçon obtenu à partir d'une bande de matière textile 26 complexée à une couche d'adhésif 27 sensible à la chaleur et à la pression. On referme la presse chauffante le temps nécessaire pour que l'adhésif de la couche 27 flue en une zone 28 et vienne faire adhérer entre elles les surfaces textiles 26 de la pièce de renfort et 12a, 12b de l'anneau.

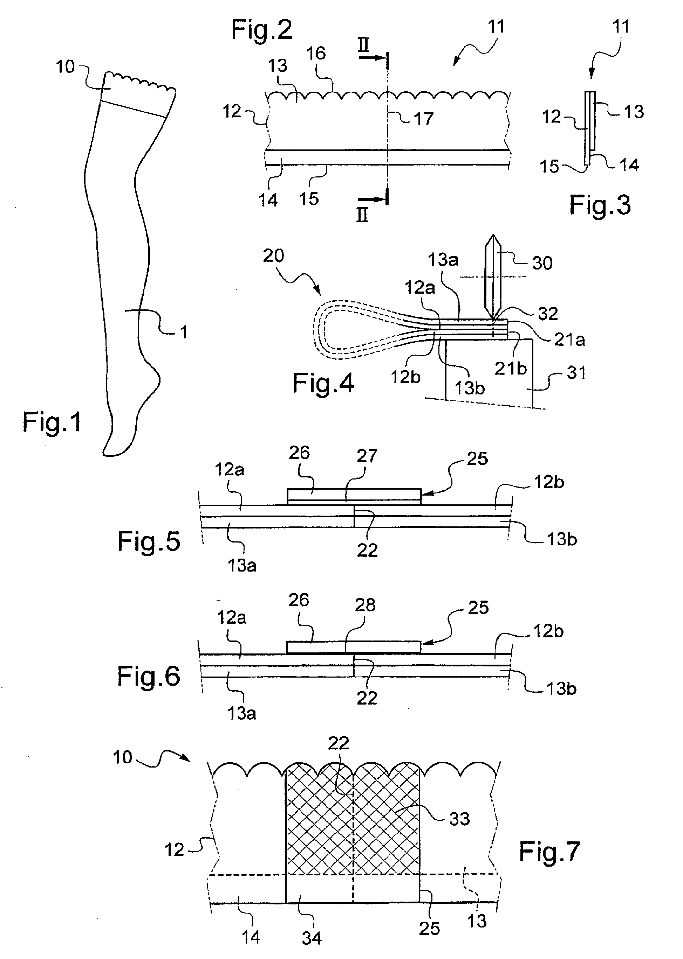

On place ensuite le complexe obtenu entre les sonotrodes d'une machine de soudure à ultrasons à poste fixe, par exemple une machine commercialisée sous la marque Branson 2000 de manière à souder l'une à l'autre par fusion des fibres, les surfaces antagonistes des surfaces textiles 26 d'une part et 12a, 12b d'autre part. La largeur de la sonotrode supérieure est égale ou inférieure à la largeur de la pièce de raccordement 25 (dans le sens longitudinal de l'anneau) et peut être transversalement plus large que l'anneau. Il s'opère donc une soudure, de préférence en forme de réseau de points ou de lignes de soudure, dans une zone 33 représentée par un quadrillage sur la figure 7, correspondant à la partie du ruban couverte de silicone. La partie restante 34, correspondant à la bordure 14 non siliconée, peut n'être pas soudée lors de cette opération du fait qu'elle n'a pas nécessairement l'épaisseur suffisante pour être en contact avec les deux sonotrodes et donc pour être soumise aux ultrasons. Néanmoins la soudure ultrasonore intéressant la partie 33 est suffisante pour assurer la solidité définitive de la jonction de l'anneau et sa résistance même sous des efforts de traction élevés. La machine de soudure est réglée à un niveau suffisamment bas pour que l'énergie et l'amplitude des ondes ultrasonores ne dégradent pas le silicone.

La largeur de la bande de raccordement 25 est avantageusement comprise entre 8 mm et 12 mm de manière à permettre une surface suffisante pour assurer la fixation par soudure, mais néanmoins pas excessive au point de créer une gêne au porter.

## Revendications

1. Procédé de réalisation d'article textile (10) constitué d'une matière textile élastique (12) réalisée avec au moins une partie de fibres thermoplastiques et sur laquelle est enduite une couche (13) de matière élastomérique non soudable, l'article (10) présentant deux bords qui doivent être assemblés l'un à l'autre, procédé selon lequel :
a) on dispose l'article en deux épaisseurs superposées (12a, 13a ; 12b, 13b) au niveau des deux bords à joindre, couche de matière élastique (12a) contre couche de matière élastique (12b),
b) on découpe aux ultrasons les deux épaisseurs (12a, 13a ; 12b, 13b) au niveau des deux bords à joindre de manière à souder provisoirement les deux couches de matière élastique (12a, 12b) le long d'une ligne de soudure provisoire (22),
c) on déploie l'article provisoirement assemblé et on superpose au-dessus de la ligne de soudure provisoire (22), du côté de la couche de matière textile élastique (12), une pièce de raccordement (25) en matière textile réalisée avec au moins une partie de fibres thermoplastiques, et on thermocolle cette pièce de raccordement (25) sous pression et à chaud,
d) on soude aux ultrasons le complexe ainsi obtenu de manière à solidariser définitivement la pièce de raccordement (25) à la couche de matière textile élastique (12), dans des conditions énergétiques ne détériorant pas la couche de matière élastomérique (13).

2. Procédé selon la revendication 1, **caractérisée en ce que** la matière élastomérique est du silicone.

3. Procédé selon l'une quelconque des revendications 1 ou 2, **caractérisé en ce que** la matière textile élastique (12) est réalisée en un tricot élastique.

4. Procédé selon l'une quelconque des revendications 1 à 3, **caractérisé en ce que** la pièce de raccordement (25) est réalisée en un tricot élastique.

## Patentansprüche

1. Verfahren zur Herstellung eines Textilartikels (10), der aus einem elastischen Textilmaterial (12) besteht, das mit mindestens einem Teil aus thermoplastischen Fasern hergestellt ist, und auf dem eine Schicht (13) aus elastomerem, nicht schweißbarem Material aufgetragen ist, wobei der Artikel (10) zwei Ränder aufweist, die miteinander verbunden werden müssen, wobei gemäß dem Verfahren:
a) der Artikel in zwei übereinander gelegten Dicken (12a, 13a ; 12b, 13b) auf der Ebene der zwei zu verbindenden Ränder angeordnet wird, eine Schicht aus elastischem Material (12a) gegen eine Schicht aus elastischen Material (12b),
b) die zwei Dicken (12a, 13a; 12b, 13b) mit Ultraschall auf der Ebene der zwei zu verbindenden Ränder geschnitten werden, um provisorisch die zwei Schichten aus elastischem Material (12a, 12b) entlang einer provisorischen Schweißlinie (22) zu schweißen,
c) der Artikel provisorisch auseinandergefaltet und über der provisorischen Schweißlinie (22) auf der Seite der Schicht aus elastischem Textilmaterial (12) ein Verbindungsstück (25) aus Textilmaterial angeordnet wird, das mit mindestens einem Teil aus thermoplastischen Fasern hergestellt ist, und dieses Verbindungsstück (25) unter Druck und warm thermisch geklebt wird,
d) der so erhaltene Komplex mit Ultraschall geschweißt wird, um das Verbindungsstück (25) definitiv fest mit der Schicht aus elastischem Textilmaterial (12) unter energetischen Bedingungen zu verbinden, die die Schicht aus elastomerem Material (13) nicht beschädigen.

2. Verfahren nach Anspruch 1, **dadurch gekennzeichnet, dass** das elastomere Material Silikon ist.

3. Verfahren nach einem der Ansprüche 1 oder 2, **dadurch gekennzeichnet, dass** das elastische Textilmaterial (12) aus einem elastischen Trikot hergestellt ist.

4. Verfahren nach einem der Ansprüche 1 bis 3, **dadurch gekennzeichnet, dass** das Verbindungsstück (25) aus einem elastischen Trikot hergestellt ist.

## Claims

1. A method for making a textile article (10) constituted of an elastic textile material (12) made with at least one potion of thermoplastic fibers and on which a layer (13) of elastomeric non-weldable material is coated, the article (10) having two edges which are to be assembled to one another, method according to which:
a) the article is disposed in two superimposed thicknesses (12a, 13a; 12b, 13b) at the two edges to be joined, elastic material layer (12a) against elastic material layer (12b),
b) the two thicknesses (12a, 13a; 12b, 13b) are ultrasonically cut at the two edges to be joined so as to provisionally weld the two elastic material layers (12a, 12b) along a provisional welding line (22),
c) the provisionally assembled article is deployed and a connecting piece (25) made of textile material made with at least one portion of thermoplastic fibers is superimposed over the provisional welding line (22), on the side of the elastic textile material layer (12), and this connecting piece (25) is thermo-fused under pressure and heat.
d) the thus obtained complex is ultrasonically welded so as to permanently secure the connecting piece (25) to the elastic textile material layer (12), in energy conditions which not deteriorate the elastomeric material layer (13).

2. The method according to claim 1, **characterized in that** the elastomeric material is silicone.

3. The method according to any one of claims 1 or 2, **characterized in that** the elastic textile material (12) is made of an elastic knitted fabric.

4. The method according to any one of claims 1 to 3, **characterized in that** the connecting piece (25) is made of an elastic knitted fabric.
